(19) Europäisches Patentamt / European Patent Office / Office européen des brevets

(11) **EP 3 151 192 B1**

(12) **EUROPEAN PATENT SPECIFICATION**

(45) Date of publication and mention
of the grant of the patent:
**18.04.2018 Bulletin 2018/16**

(21) Application number: **16190344.8**

(22) Date of filing: **23.09.2016**

(51) Int Cl.:
*G06T 7/11* (2017.01)     *G06T 7/60* (2017.01)
*G06T 7/73* (2017.01)     *G06T 7/13* (2017.01)
*G06T 7/194* (2017.01)     *G06T 7/00* (2017.01)

(54) **METHOD AND SYSTEM FOR AUTOMATED ANALYSIS OF CELL IMAGES**

VERFAHREN UND SYSTEM ZUR AUTOMATISCHEN ANALYSE VON ZELLBILDERN

PROCEDE ET SYSTEME D'ANALYSE AUTOMATIQUE D'IMAGES CELLULAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2015 US 201562235076 P**

(43) Date of publication of application:
**05.04.2017 Bulletin 2017/14**

(73) Proprietor: **Konica Minolta Laboratory U.S.A., Inc.
San Mateo CA 94403 (US)**

(72) Inventors:
• **Paradkar, Foram Manish
San Mateo, CA 94403 (US)**
• **Zhang, Yongmian
San Mateo, CA 94403 (US)**
• **Zhu, Jingwen
San Mateo, CA 94403 (US)**
• **Gu, Haisong
San Mateo, CA 94403 (US)**

(74) Representative: **Hoffmann Eitle
Patent- und Rechtsanwälte PartmbB
Arabellastraße 30
81925 München (DE)**

(56) References cited:
**KR-A- 20100 116 404     US-A- 5 828 776**

• **M Farhan: "MUHAMMAD FARHAN AUTOMATED
CLUMP SPLITTING FOR BIOLOGICAL CELL
SEGMENTATION IN MICROSCOPY USING
IMAGE ANALYSIS", Master Thesis, 4 November
2009 (2009-11-04), pages 1-70, XP055321539,
Retrieved from the Internet:
URL:http://dspace.cc.tut.fi/dpub/bitstream
/handle/123456789/6794/farhan.pdf?sequence
=3 [retrieved on 2016-11-22]**
• **AL-KOFAHI Y ET AL: "Improved Automatic
Detection and Segmentation of Cell Nuclei in
Histopathology Images", IEEE TRANSACTIONS
ON BIOMEDICAL ENGINEERING, IEEE SERVICE
CENTER, PISCATAWAY, NJ, USA, vol. 57, no. 4,
1 April 2010 (2010-04-01), pages 841-852,
XP011343206, ISSN: 0018-9294, DOI:
10.1109/TBME.2009.2035102**

**Description**

FIELD OF THE INVENTION

The present disclosure relates to a method and system for automated analysis of cell images, and more particularly for a method and system for automated cell segmentation for microscopic cell images, which can be categorized into single cells, small clusters, and large clusters, and wherein cell boundaries can be extracted from the cell images.

BACKGROUND OF THE INVENTION

In the biomedical imaging domain, segmenting the touching cell nuclei can be a very important step in image analysis. Although there are methods and systems, which perform cell segmentation, these systems do not provide a solution for different clustering types of cells.

Document US 5 828 776 A describes a biological specimen classification strategy employing identification and integration of multiple cell patterns. An automated microscope acquires an image of a biological specimen such as a Pap smear and provides an image output to biological classifiers. The classifiers independently detect and classify a number of specimen types and provide classifications to an output field of view integrator. The integrator integrates the classifications. The integrated output then determines whether the classifiers should be reapplied to the image.

SUMMARY OF THE INVENTION

In consideration of the above issues, it would be desirable to have a system and method for the cell segmentation, for example, of microscopy cell images by first categorizing them into single cells, small clusters, and larger clusters followed by segmenting the small and larger clusters, for example, by different methods.

The above object is achieved by the subject matter of the independent claims where the dependent claims describe advantageous embodiments.

It is to be understood that both the foregoing general description and the following detailed description are exemplary and explanatory and are intended to provide further explanation of the invention as claimed.

**BRIEF DESCRIPTION OF THE DRAWINGS**

The accompanying drawings are included to provide a further understanding of the invention, and are incorporated in and constitute a part of this specification. The drawings illustrate embodiments of the invention and, together with the description, serve to explain the principles of the invention.

FIG. 1 is an illustration of a plurality of different cell types, which can be analyzed and processed in accordance with an exemplary embodiment.

FIG. 2 is a diagram of a system for automatic cell segmentation in accordance with an exemplary embodiment.

FIG. 3A is an illustration of a sample input in accordance with an exemplary embodiment.

FIG. 3B is an illustration of a generated mask in accordance with an exemplary embodiment.

FIG. 4 is a block diagram of a cell category classification system in accordance with an exemplary embodiment.

FIG. 5 is an illustration of an example of a result from a concavity point detection overlay with manually highlighted regions for a single cell, a small cluster, and a large cluster region in accordance with an exemplary embodiment.

FIG. 6 is an illustration of an example of an output from the cell region category classification.

FIG. 7 is a flow chart for boundary and variance based segmentation in accordance with an exemplary embodiment.

FIG. 8A is an illustration of an original image in accordance with exemplary embodiment.

FIG. 8B is an illustration of a corresponding variance image in accordance with an exemplary embodiment.

FIG. 9A is an illustration of a valid pair showing a method differentiating between the valid pair and the invalid pair in accordance with an exemplary embodiment.

FIG. 9B is an illustration of an invalid pair showing a method differentiating between the valid pair and the invalid pair in accordance with an exemplary embodiment.

FIG. 10 is an illustration of a most likely defect pair, a less likely defect pair, and an invalid defect pair in accordance with an exemplary embodiment.

FIG. 11 is an illustration of a system and method for finding a second defect to form a valid pair in accordance with an exemplary embodiment.

FIG. 12 is an illustration of an example of an extraction and a rotation of a region of interest (ROI).

FIG. 13 is an illustration of exemplary samples or results from a boundary-variance segmentation.

FIG. 14 is a flowchart showing a generalized Laplacian of Gaussian (gLoG) filtering based segmentation in accordance with an exemplary embodiment.

FIGS. 15A and 15B are illustrations of a sample response surface as an image and as a surface plot, respectively.

FIG. 16 is an illustration of intermediate results from a local-maxima clustering in accordance with an exemplary embodiment.

FIG. 17 is an illustration of results of segmented cell boundaries.

## DETAILED DESCRIPTION

Reference will now be made in detail to the present preferred embodiments of the invention, examples of which are illustrated in the accompanying drawings. Wherever possible, the same reference numbers are used in the drawings and the description to refer to the same or like parts.

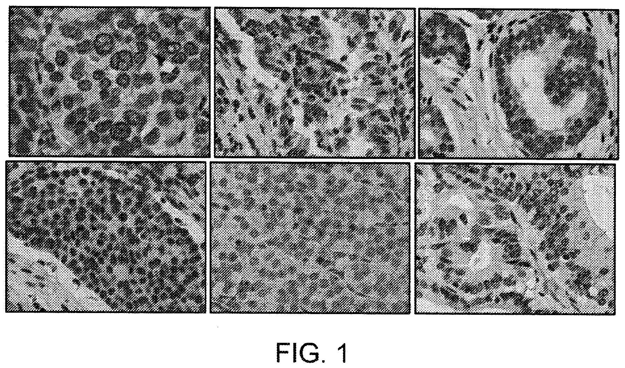

In accordance with an exemplary embodiment, unlike many other methods, a system and method are disclosed, which can be suitable for different sizes of cells present in a single image, for example, irrespective of the cell size (small or large), and which can extract the cell boundaries. FIG. 1 illustrates various kinds of cell images, which can be analyzed and processed in accordance with the systems and methods as disclosed herein.

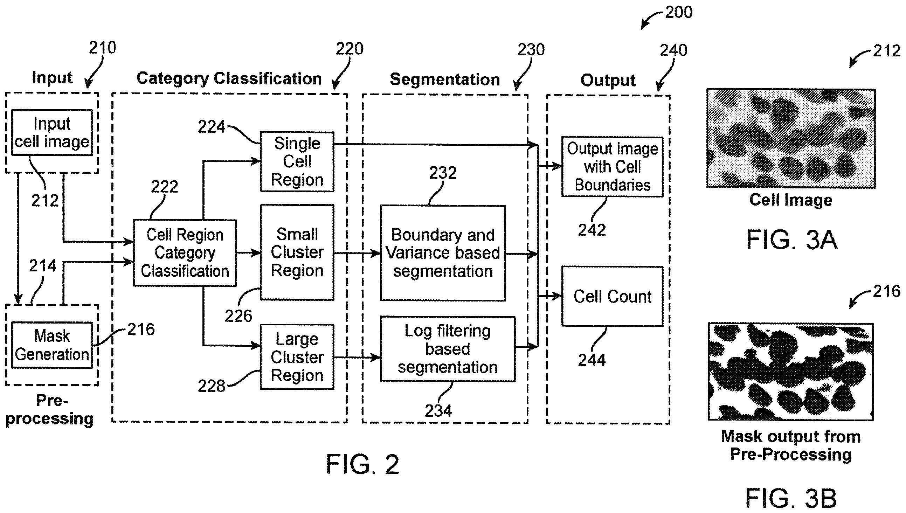

FIG. 2 shows a block diagram for a system 200 for cell segmentation in accordance with an exemplary embodiment. As shown in FIG. 2, the system 200 can include an input module 210, a pre-processing module 214, a category classification module 220, a segmentation module 230, and an output module 240. In accordance with an exemplary embodiment, the input 212, for example, can be a cell image, for example, a contrast stretched cell image obtained from a microscope. In accordance with an exemplary embodiment, the segmentation module 230 can include a boundary and variance based segmentation module 232 and a LoG (Laplacian of Gaussian) filtering based segmentation module 234. The output 240 can include output images with cell boundaries 242 and/or cell count 244.

In accordance with an exemplary embodiment, the input module 210, the pre-processing module 214, the category classification module 220, the segmentation module 230, and the output module 240 can include one or more computer or processing devices having a memory, a processor, an operating system and/or software and/or an optional graphical user interface (GUI) and/or display. In accordance with an exemplary embodiment, for example, each of the modules 210, 214, 220, 230, 240 can be combined in one computer device, for example, a standalone computer, or can be contained within one or more computer devices, wherein each of the one or more computer devices has a memory, a processor, an operating system and/or software, and a graphical user interface (GUI) or display. For example, a graphical user interface can be used to display the cell images and/or cell count as disclosed herein.

## Pre-Processing Module:

In accordance with an exemplary embodiment, the pre-processing module 214 can perform binary mask 216 on the inputted cell images, which separates the foreground cells from the background. In accordance with an exemplary embodiment, the generated mask (or binary mask) can be generated using different methods, for example, thresholding, k-mean clustering followed by thresholding, and/or a machine learning method. FIGS. 3A and 3b are illustrations of the input image 212 and corresponding generated mask 216 using the pre-processing module 214.

**Category Classification:**

In accordance with an exemplary embodiment, using the input mask 216, the category classification module 220 classifies the cell region components 222 into one of the 3 following categories.

    1. Single cells 224
    2. Small Cluster Regions 226
    3. Large cluster Regions 228

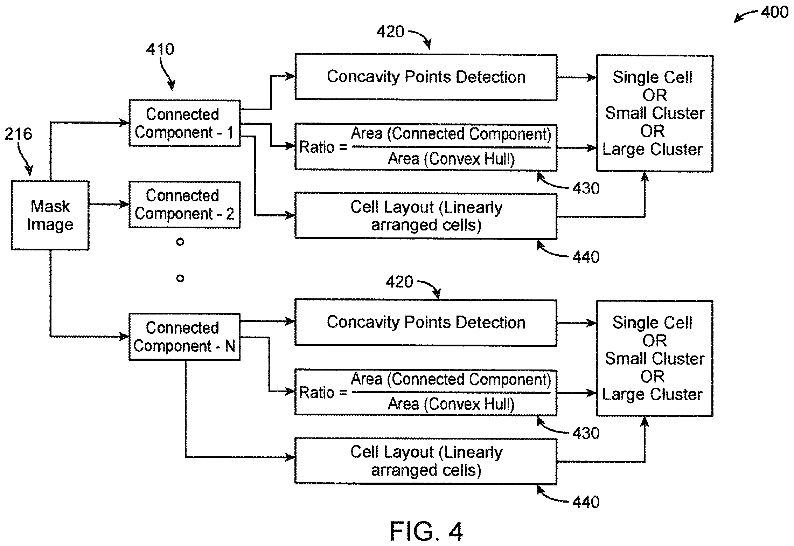

FIG. 4 is a block diagram of a cell category classification system 400 in accordance with an exemplary embodiment. As shown in FIG. 4, for each closed contour present in the mask image 216, the category classification module 220 detects all the concavity points present in the contour 410 and based on the number of concavity points and a ratio of hull area to the contour area 420, determines if the mask image is a single cell 224, a small cluster region 226, or a large cluster region 228.

In accordance with an exemplary embodiment, for example, the concavity points can be detected based on the following algorithm.

- Approximate the contour by choosing every $n^{th}$ point from contour. The value **$n$** can be determined based on the amount of noise present in the contour boundary.
- For each point X with neighbors Y and Z, calculate the cross-product of vectors XY and XZ.
- If (*crossProduct(XY,XZ)* < 0) and (*Angie(XY,XZ)* < *threshold*) then X is a concavity point.
- Once the concavity points are detected, for example, in accordance with an exemplary embodiment, one or more constraints can be added like depth or distance from the hull, minimum distance between 2 possible concavity points etc.

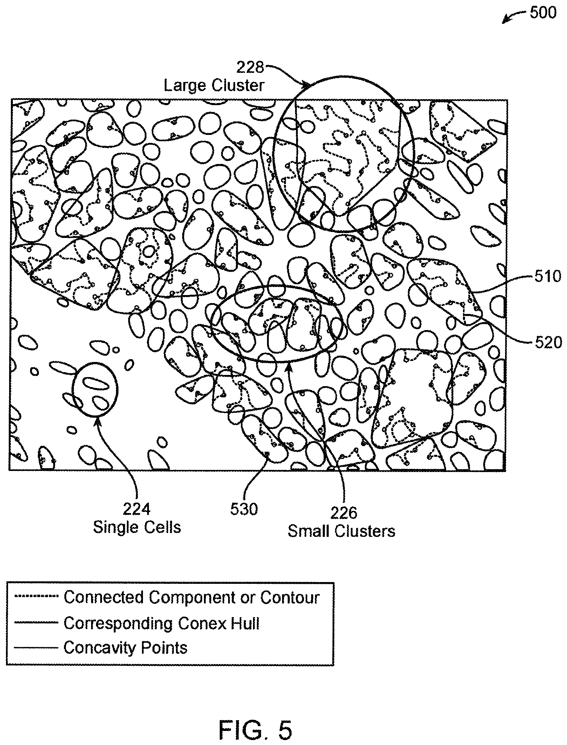

FIG. 5 is an illustration of an example of the output 500 from a concavity points detection as disclosed above, which displays the contours 510, convex Hull of the contour 520, and detected concavity points 530. In addition, as shown in FIG. 5, the output 500 can include single cells 224, small cluster regions 226, and large cluster regions 228.

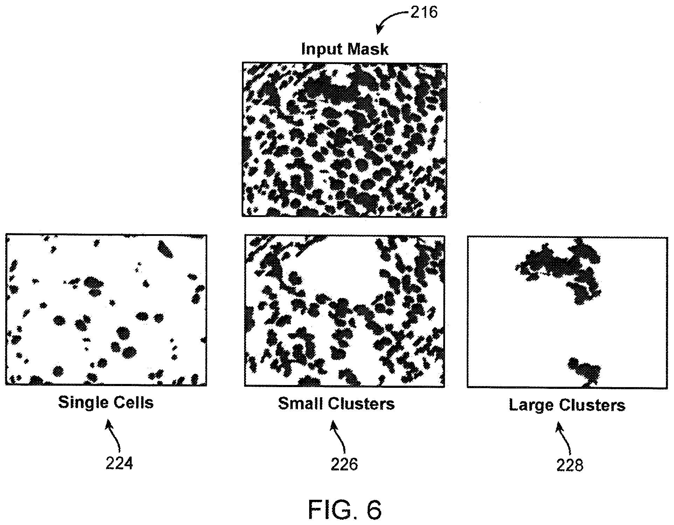

In accordance with an exemplary embodiment, once the convex hull and concavity points are detected, the contours can be separated as shown in FIG. 6 as single cells 224, small cluster regions 226, or large cluster regions 228, for example, based on the following 3 features (FIG. 4):

- Number of concavity Points in a contour 420
- Ratio of Contour_Area / Hull_Area 430
- Layout or linear arrangement of cells 440, which includes disqualifying the clusters, which are densely packed, for which concavity Points information inside the mask cannot be detected

**Segmentation:**

**Boundary and Variance based Segmentation for Small Clusters:**

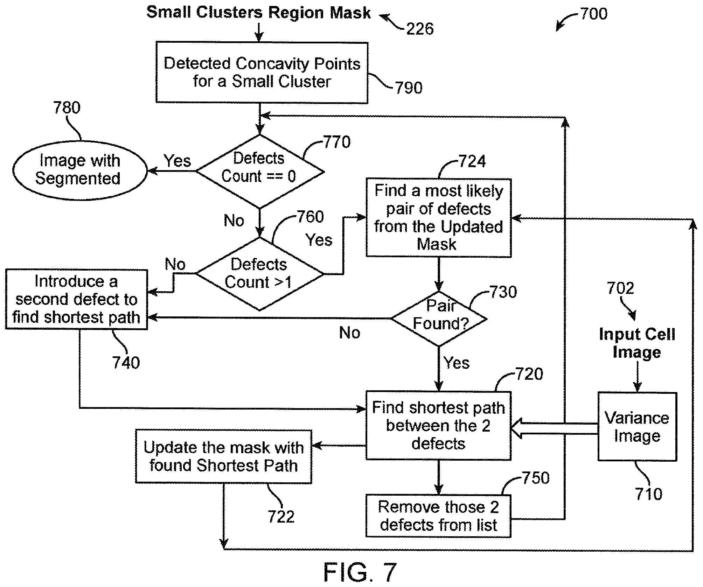

In accordance with an exemplary embodiment, for segmenting small cluster regions 226, a method is disclosed, which uses the boundary shape information as well as variance image derived from image intensities. FIG. 7 is a flow chart 700 for boundary and variance based segmentation in accordance with an exemplary embodiment.

**Variance Image:**

In accordance with an exemplary embodiment, in step 710, the input contrast stretched image 702 is received a segmentation module 232, which generates a variance image from the input image 702. In accordance with an exemplary embodiment, the reason of using edge variance image can be, in this image, the edges are more prominent compared to using the actual image, and thus, the chances of finding the correct shortest path are higher. The edge variance is a measure to estimate the strength of edge in a local region.

In accordance with an exemplary embodiment, the following filter can be used to generate edge variance image:

$$Var(I_c) = \sum_{i \in N, i \neq c} w \times \exp\left(\frac{-(I_i - I_c)}{2\sigma^2}\right)$$

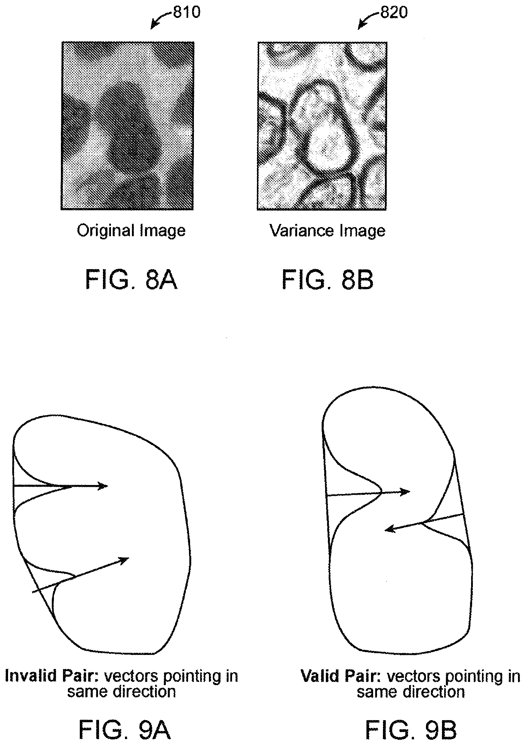

Where $N$ is a 3 x 3 neighborhood system, $I_c$ is the intensity of the center pixel in N, $I_i$ is the intensity of pixel $i$ in $N$; w is inversed distance between a pixel $i$ to the center pixel $c$. FIGS. 8A and 8B illustrate an example of an input image 810 and its corresponding variance image 820, respectively.

**Finding the Most-likely pair of defects:**

When the number of defects is more than 1, the most likely pair of defects for which a segmentation boundary can be found. In accordance with an exemplary embodiment, in step 720, the Euclidean distance between each pair of defects can be found, and the pair of defects with the smallest distance can be identified in step 730.

In addition, before forming a pair, in step 724, a test can be performed to check if both the defects are not on the "same side" of the contour. For example, FIGS. 9A and 9B are illustrations of a sample valid pair of defects 910 and an invalid pair of defects 920, respectively, showing how to differentiate between a valid pair and an invalid pair, and which shows how the most-likely pair from the multiple defects can be found. In accordance with an exemplary embodiment, for example, for valid pairs (FIG. 9B), the vectors from the defect and its projection on the hull will be pointing in an opposite direction, while for the invalid defects (FIG. 9A), the vectors will point in the same direction. In step 750, if the defect is not found to be the shortest path, the two points of the pair can be removed from the list.

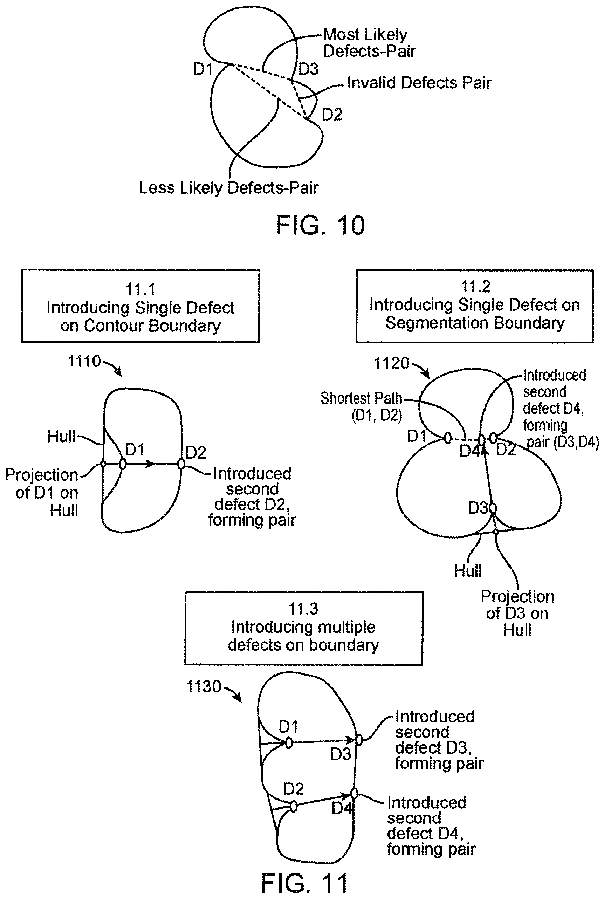

For example, as shown in FIG. 10, even though distance (D2, D3) is less than distance (D1, D3); (D2, D3) are not selected as a pair because they are an "invalid" defect pair. From pair (D1, D3) and pair (D1, D2), in step 730, for example, the most likely pair is chosen as pair (D1, D3), since its Euclidean distance is smallest among the pairs (D1, D3) and (D1, D2).

**Introducing Second defect Point:**

In accordance with an exemplary embodiment, a second defect in the pair can be introduced in step 740, in order to find shortest path between two defects.

- Only single defect remaining 1110, 1120 (for example, FIG. 11, case 11.1 and 11.2); or
- All the defects present are on the "same" side of contour and no valid pair is present 1130 (for example, FIG. 11, case 11.3).

In accordance with an exemplary embodiment, the second defect is a point on the boundary (contour boundary or segmentation boundary) on the line formed by a defect point and its projection on its hull line. FIG. 11 shows exemplary embodiments of how the second defect can be found. For example, in case 11.1, a single boundary defect D2 can be introduced on a contour boundary, which form a pair (D1, D2). Alternatively, for example, in case 11.2, a single defect D4, can be introduced on a segmentation boundary forming a pair (D3, D4). In case 11.3, multiple defections D3, D4, can be introduced forming pairs (D1, D3), and (D2, D4), respectively.

**Finding Shortest Path between Two Defects:**

In accordance with an exemplary embodiment, once a valid defect pair is found, a shortest path algorithm can be used to find a path between the two defects 720, which follows the actual edge between the two defects.

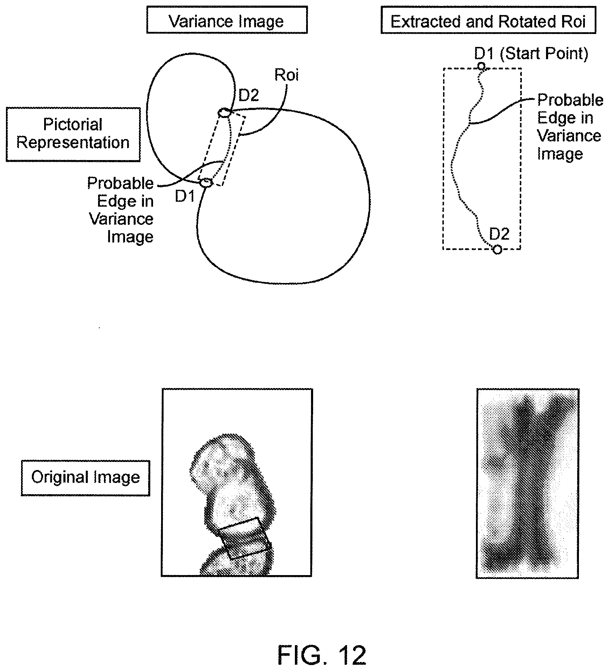

In accordance with an exemplary embodiment, as shown in FIG. 12, the region of interest (ROI) can be extracted from the image's variance image to find the shortest path. The region of interest (ROI) can be rotated in such a way the orientation of the region of interest is vertical, and the start of shortest path (one of the defects) is in the center of the rectangle.

FIG. 12 is an illustration of an example of an extraction and rotation of a region of interest (ROI). Once the ROI is extracted, the shortest path algorithm starts from the start point, and traverses on the next layer, in this case, the next row to find the next probable point in the path. From the next layer, whichever point makes the cost of the path the lowest, can be selected as the next point in the path.

The path P can be defined as a sequences of points $(p_1, p_2, ... p_i, ....., p_m)$, wherein $p_1$ is always a defect point. In addition, the second defect is a last point in the path P, since a complete path reaching from one defect to another defect is desired, $p_i$ is $i^{th}$ layer's point in path P.

The cost function can be defined as

$$C(P) = \sum_{i=1}^{m} C_0(i, p_i) + \sum_{i=1}^{m-1} C_1(i, p_i, p_{i+1})$$

where $C_0$ is the object term and $C_1$ is constraint term, for example, $C_1$ will decide how much farther a next point $(p_{i+1})$ can be from the current point $(p_i)$, column wise.

$$C_1(i, p_i, p_{i+1}) = \begin{cases} 0 & if \; |p_i - p_{i+1}| \le 1 \\ \infty & otherwise \end{cases}$$

$C_0$ is calculated from the intensity value of the variance image at $i^{th}$ layer and the previous point's cost value. The point $p_{i+1}$ can be selected based on the lowest cost and added to the existing path, P.

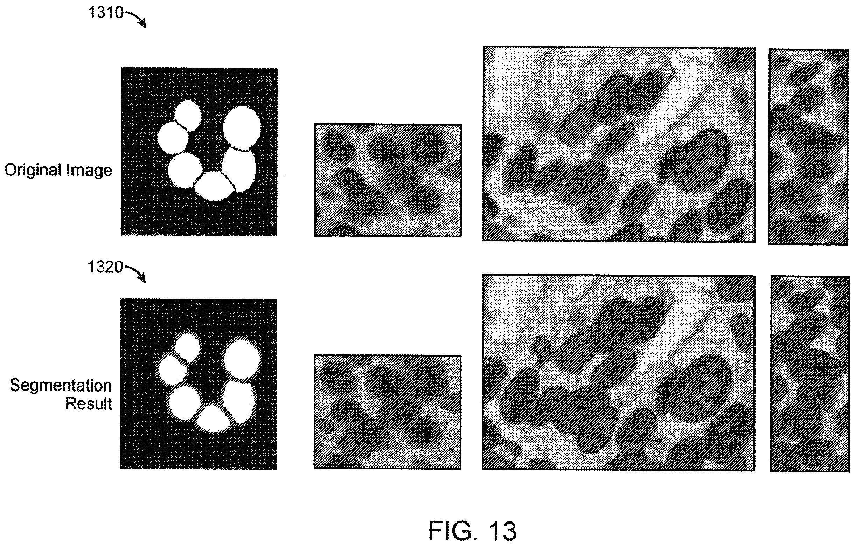

FIG. 13 is an illustration of an example of results from boundary-variance segmentation, comparing the original image 1310 to the segmentation result 1320, and the results generated from finding most-likely defect pairs and the shortest path between the most likely defect pairs.

In addition, since the boundaries separate the cells, an erosion on the image can be performed which has segmentation boundaries overlaid on the mask, which can separate the individual cells, and the count of connected-component can provide a cell count.

**LoG (Laplacian of Gaussian) Filtering based Segmentation for Large Clusters:**

In accordance with an exemplary embodiment, once the large cluster region 228 is detected from the mask image, the large cluster region 228 is sent to the segmentation module for large clusters. For the cell segmentation of large cluster region, a segmentation based on texture, for example, a blob detection method, such as a generalized Laplacian of Gaussian (gLoG), can be used.

**LoG Filtering with multiple scales:**

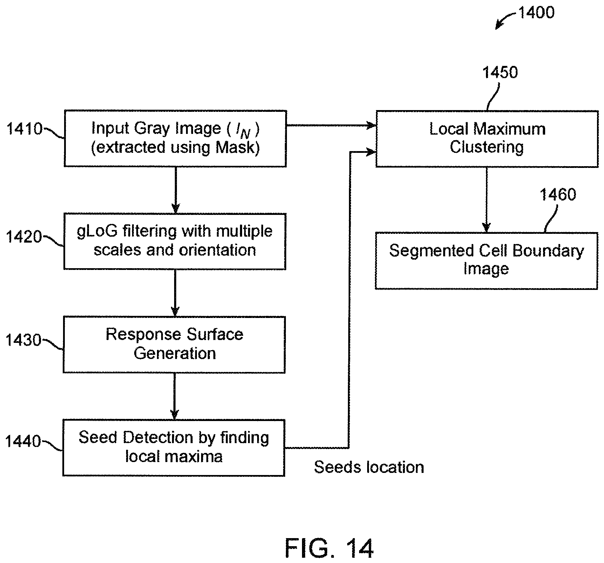

In accordance with an exemplary embodiment, a gLoG filtering based segmentation is shown in FIG. 14. In accordance with an exemplary embodiment, in step 1410, the cell segmentation boundaries can be found by extracting the input grayscale image using the input mask such that only cell nuclei to be processed and no background is present, which can be called image $I_N$.

In step 1420, the image $I_N$, is processed using a Laplacian of Gaussian (LoG) filtering with multiple scales and orientation. The LoG filter can be defined as follows.

$$LoG(x, y; \; \sigma) = \frac{\partial^2 \, G(x, y; \sigma)}{\partial x^2} + \frac{\partial^2 \, G(x, y; \sigma)}{\partial y^2} \qquad (1)$$

where, $\sigma$ is scale value or size of the filters and $G(x, y; \sigma)$ is a Gaussian filter with size $\sigma$ and 0 mean. For multiple scales, $\sigma$ the input image, $I_N$ is filtered. In addition, to normalize the response for multiple scale values, $\sigma$

$$LoG_{norm}(x, y; \; \sigma) = \sigma^2 * LoG(x, y; \; \sigma), \quad where \, \sigma = [\sigma_{min}, \ldots, \sigma_{max}] \qquad (2)$$

which filter can produce a peak response with $radius, r = \sigma^* \sqrt{2}$

However, because the above LoG is only rotational symmetric, for example, the $\sigma$ is set to be equal for both x and y coordinates, the above equation is limited in detecting cell nuclei with general elliptical shapes. Thus, in accordance with an exemplary embodiment, to detect general elliptical cell nuclei, a generalized Laplacian of Gaussian (gLoG) filter can be used, wherein $gLoG(x, y; \; \sigma_x, \sigma_y, \; \theta)$ replaces $LoG(x, y; \sigma)$ in equation (2).

A general form of Gaussian kernel can be written as

$$G(x, y) = C \cdot e^{-(a(x-x_0)^2 + 2b(x-x_0)(y-y_0) + c(y-y_0)^2)} \qquad (3)$$

where C is a normalization factor, and $x_0$ and $y_0$ are kernel center; a, b and c are the coefficients that describe the shape, orientation of the kernel, and can be derived by the means of $\sigma_x$, $\sigma_y$, and $\theta$ as follows

$$a = \frac{cos^2\theta}{2\sigma_x{}^2} + \frac{sin^2\theta}{2\sigma_y{}^2}$$

$$c = \frac{sin2\theta}{2\sigma_x{}^2} + \frac{sin2\theta}{2\sigma_y{}^2}$$

$$b = \frac{cos^2\theta}{4\sigma_x{}^2} + \frac{sin^2\theta}{4\sigma_y{}^2}$$

In accordance with an exemplary embodiment, to be simplified, $x_0$ and $y_0$ can be zero. Therefore, the 5-D Gaussian kernel turns into

$$G(x, y, \sigma_x, \sigma_y, \theta) = C \cdot e^{-(ax^2 + 2bxy + cy^2)}$$

In accordance with an exemplary embodiment, the generalized Laplacian of Gaussian (gLoG) can be written as:

$$gLoG(x, y; \sigma_x, \sigma_y, \theta) = \frac{\partial^2 G(x,y; \sigma_x, \sigma_y, \theta)}{\partial x^2} + \frac{\partial^2 G(x,y; \sigma_x, \sigma_y, \theta)}{\partial y^2} \qquad (4)$$

To normalize the response for multiple scales and orientations, Equation (2) can be rewritten as a general form

$$gLoG_{norm}(x, y; \sigma) = \sigma_x\sigma_y * gLoG(x, y; \sigma_x, \sigma_y, \theta)$$

where $\sigma_x \in [\sigma_x{}^{min}, ..., \sigma_x{}^{max}]$ , $\sigma_y \in [\sigma_y{}^{min}, ..., \sigma_y{}^{max}]$ and $\theta \in [0, 45°, 90°, 135°]$.

**Response Surface:**

In step 1430, once the multiple filtered images for different scales have been obtained, using the Distance Map, $D_N$ as constraint factor, a single response surface can be obtained by combining these filtering results into single image expressed by following equation. Accordingly, the response for a generalized LoG can be written as

$$R_n(x, y) = \text{argmax}_{\sigma_x, \sigma_y, \theta}\{gLoG_{norm}(x, y, \sigma_x, \sigma_y, \theta) * I_N(x, y)\} \qquad (5)$$

Where $\sigma_x \in [\sigma_x{}^{min}, \sigma_x{}^{max}]$, $\sigma_y \in [\sigma_y{}^{min}, \sigma_y{}^{max}]$, $\theta = [0, ..., 135°]$ and

$$\sigma_x{}^{max} = \max\{\sigma_x{}^{min}, \min\{\sigma_x{}^{max}, 2D_{N(x,y)}\}\}, \qquad (6)$$

$$\sigma_y{}^{max} = \max\{\sigma_y{}^{min}, \min\{\sigma_y{}^{max}, 2D_{N(x,y)}\}\} \qquad (7)$$

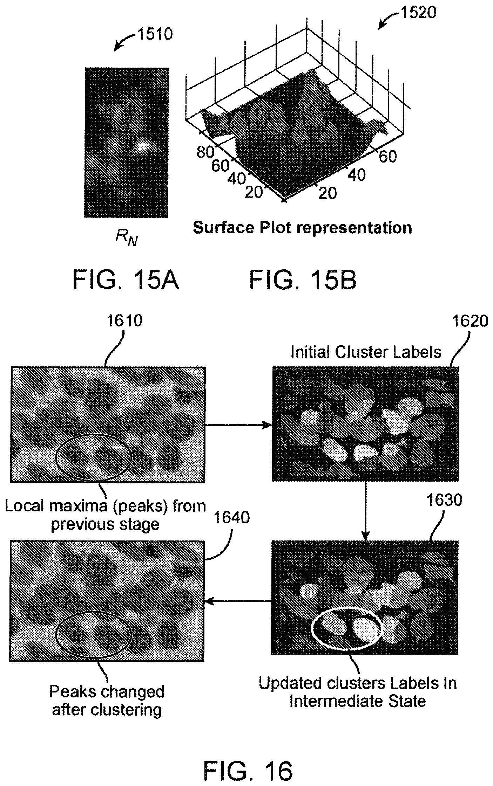

FIGS. 15A and 15B are illustrations of a sample response surface from step 1430 shown as an image 1510 and as a surface plot 1520, respectively.

**Seed Detection:**

From the response surface, in step 1440, $R_N$ the local maxima can be detected to generate the initial seeds, which are the center of the nuclei or at least they appear to be the center of the nuclei. The initial seed locations can be passed to a local-maximum based clustering algorithm to refine the clustering of cell pixels for more accurate cell boundaries.

**Local Maximum Clustering:**

In accordance with an exemplary embodiment, in step 1450, a local maximum clustering on the input grayscale image can be performed to help ensure assignment of pixels to the cluster centers or the seed points.

The resolution parameter, $r$ defines a region of $2r \times 2r$ around each pixel to search for the nearest and closest matching seed point. The local maximum clustering algorithm can be described in the following steps.

    i. For each seed point, assign the pixels in its neighborhood $2r \times 2r$ same cluster label as the seed point, if the intensity difference between the pixel and cluster center (seed point) is *less than threshold*

    ii. Combine the 2 clusters into 1 cluster if

        ◦ The distance between two seed points is less than resolution parameter, $r$

        ◦ The intensity difference between the two seed points is *less than threshold*

    iii. Assign the cluster labels of merged clusters as same and find a new seed, which is maximum from both the seed points

    iv. If there is change in the seed points, repeat the steps (ii) and (iii)

In accordance with an exemplary embodiment, after the local maximum clustering the unwanted extra seeds will be removed and pixels will be assigned proper cluster label in step 1460. Examples, of the intermediate results are illustrated in FIG. 16. As shown in FIG. 16, the local maxima (peaks) from the previous stage 1610, the initial cluster labels 1620, the updated cluster labels in an intermediate state 1630, and peak changes after clustering 1640.

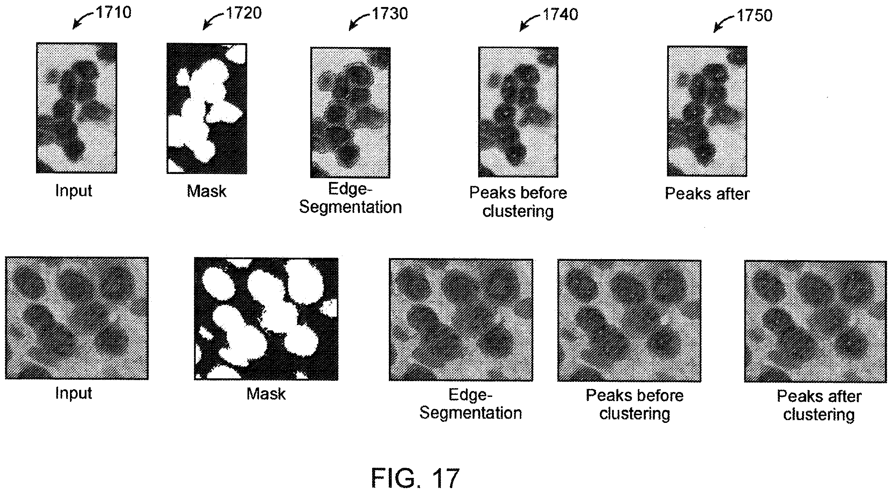

The clusters boundaries are the cell boundaries and thus, the cell segmentation result can be seen, for example, in FIG. 17. As shown in FIG. 17, the process can include the following stages: input 1710, mask 1720, edge-segmentation 1730, peaks before clustering 1740, and peaks after clustering 1750.

**Output Cell Count:**

**Single Cells image Cell Counting:**

For single cells image (or single cell regions), in accordance with an exemplary embodiment, the total number of cells can be derived based on the total connected-components from the binary mask.

**Small Cluster Region Cell Counting:**

Since a segmentation based on a contour shape of the small cluster region can be used, for example, a boundary-variance based segmentation for small clusters, and wherein the segmentation boundaries clearly separate the cells. In accordance with an exemplary embodiment, performing a morphological erosion/dilation on the image, which has segmentation boundaries overlaid on mask, separates the individual cells and thus the count of connected-components can give a cell count.

**LoG filtering based segmentation for Large Cluster Region Counting:**

LoG filtering detects the nuclei of cells in the large cluster of cells and the detected nuclei can be further used as seeds for any region segmentation methods, such as watershed segmentation method or level set segmentation method, which will separate the individual cells from the cluster and thus the count of connected-components can give a cell count.

The total number of clusters labeled gives the count of total cells. Thus, in accordance with an exemplary embodiment,

$$
\begin{aligned}
Cell\ count \\
= Total\ number\ of\ connected-component\ labels\ from\ Single_{Cell} mask \\
+ Total\ number\ of\ connected\ component\ labels\ from\ modified\ Small\ Clusters\ mask \\
+ Total\ number\ of\ cluster\ labels\ from\ the\ local\ maximum\ clustering\ algorithm
\end{aligned}
$$

where,

$$modified\ Small\ Clusters\ mask = Morphology(\ Small\ Clusters\ Mask + segmentation\ boundaries).$$

In accordance with an exemplary embodiment, a non-transitory computer readable medium is disclosed containing a computer program storing computer readable code for cell segmentation, the program being executable by a computer to cause the computer to perform a process comprising: generating a binary mask from an input image of a plurality of cells, wherein the binary mask separates foreground cells from a background; classifying each of the cell regions of the binary mask into single cell regions, small cluster regions, and large cluster regions; performing, on each of the small cluster regions, a segmentation based on a contour shape of the small cluster region; performing, on each of the large cluster regions, a segmentation based on a texture in the large cluster region; and outputting an image with cell boundaries.

The computer readable recording medium may be a magnetic recording medium, a magneto-optic recording medium, or any other recording medium which will be developed in future, all of which can be considered applicable to the present invention in all the same way. Duplicates of such medium including primary and secondary duplicate products and others are considered equivalent to the above medium without doubt. Furthermore, even if an embodiment of the present invention is a combination of software and hardware, it does not deviate from the concept of the invention at all. The present invention may be implemented such that its software part has been written onto a recording medium in advance and will be read as required in operation.

It will be apparent to those skilled in the art that various modifications and variation can be made to the structure of the present invention without departing from the scope of the invention. In view of the foregoing, it is intended that the present invention cover modifications and variations of this invention provided they fall within the scope of the following claims.

## Claims

1. A computer implemented automated method for cell segmentation for biomedical imaging, the method comprising:

    generating a binary mask (216) from an input image (212) of a plurality of cells, wherein the binary mask separates foreground cells from a background;
    classifying cell region components (410) of the binary mask each into single cell regions (224), small cluster regions (226), and large cluster regions (228), **characterized in that** the classifying is based on a number of concavity points in a contour, a ratio of a contour area to hull area (430), and a layout of cells (440);
    performing, on each of the small cluster regions, a segmentation of touching cell nuclei based on a contour shape of the small cluster region;
    performing, on each of the large cluster regions, a segmentation of touching cell nuclei based on a texture in the large cluster regions; and
    outputting an image with cell boundaries based on results of the performed segmentations.

2. The method according to claim 1, comprising:

    generating the binary mask with a thresholding, a k-mean clustering followed by a thresholding, or a machine learning method.

3. The method according to claim 1, comprising:

    detecting for each closed contour in the binary mask, each of the concavity points present in the contour and based on a number of concavity points calculating a ratio of contour area to hull area; and
    classifying each of the closed contours as one of the following classifications: the single cell region, the small cluster region, or the large cluster region.

4. The method according to claim 3, comprising:

    disqualifying clusters of cells which do not include concavity points inside the binary mask.

**5.** The method according to claim 3, comprising:

generating a variance image for each of the closed contours classified as the small cluster regions, the variance image comprising:

generating an edge variance image;
finding a most likely pair of defects when a number of defects is greater than one, the most likely pair of defects includes:

finding a Euclidean distance between each pair of defects;
if both defects are on the same side, identifying the pair of defects as an invalid pair; and
if the defects are on opposite sides, identifying the pair of defects having a smallest distance between the pair of defects as the most likely pair of defects, the most likely pair of defects corresponding to two or more cells.

**6.** The method according to claim 5, comprising:

introducing a second defect in the pair of defects for a single remaining defect or for remaining defects, which are on a same side of the contour and no valid pair is identified, the second defect being a point on a boundary on a line formed by a first defect point and a projection of the first defect's hull line; and
applying a shortest path algorithm to a path between the first defect point and the second defect point, the shortest path algorithm comprising:

extracting a region of interest;
vertically orientating the region of interest;
traversing the region of interest from a starting point and finding a next probable point in a path, selecting the next probably point in the path, which makes a smallest cost of the path, wherein the path is defined as $(p_1, p_2, ..., p_i, ....., p_m)$, wherein $p_1$ is always a defect point, and the second defect is a last point in the path P, and $p_i$ is $i^{th}$ layer's point in path P.

**7.** The method according to claim 6, wherein the cost of the path is defined as a cost function, and wherein the cost function is:

$$C(P) = \sum_{i=1}^{m} C_0\left(i, p_i\right) + \sum_{i=1}^{m-1} C_1\left(i, p_i, p_{i+1}\right)$$

where $C_0$ is the object term and $C_1$ is constraint term, $C_1$ will decide how much farther a next point ($p_{i+1}$) is from a current point ($p_i$), column wise.

$$C_1\left(i, p_i, p_{i+1}\right) = \begin{cases} 0 & if\ |p_i - p_{i+1}| \le 1 \\ \infty & otherwise \end{cases}$$

wherein $C_0$ is calculated from an intensity value of the variance image at $i^{th}$ layer and a previous point's cost value, and the point $p_{i+1}$ is selected based on a lowest cost and added to an existing path, P.

**8.** The method according to claim 1, wherein the segmentation based on the texture in the large cluster regions is a generalized Laplacian of Gaussian (gLoG) filtering based segmentation, the gLoG filtering based segmentation comprising:

inputting gray images extracted from the binary mask to generate cell segmentation boundaries of cell nuclei;
filtering the cell segmentation boundaries of the cell nuclei with a gLoG filter with one or more scales and orientations;
generating a response surface from the filtered cell segmentation boundaries of the cell nuclei using a distance map;
detecting a local maxima from the response surface to generate a plurality of seed points; and

for each of the plurality of seed points, applying a resolution algorithm.

9. The method according to claim 1, comprising:

generating a cell count, wherein:

for the single cell regions, a total number of cells based on total connected components from the binary mask;
for the small cluster regions, performing a morphological erosion and/or dilation on the image, which has segmentation boundaries overlaid on the binary mask to separate individual cells and a count of connected components; and
for the large cluster regions, a total number of large clusters labels from a local maximum clustering algorithm.

10. A computer program storing computer readable code for cell segmentation for biomedical imaging, the program being executable by a computer to cause the computer to perform a process comprising:

generating a binary mask (216) from an input image (212) of a plurality of cells, wherein the binary mask separates foreground cells from a background;
classifying cell region components (410) of the binary mask each into single cell regions (224), small cluster regions (226), and large cluster regions (228), **characterized in that** the classifying is based on a number of concavity points in a contour, a ratio of a contour area to hull area (430), and a layout of cells (440);
performing, on each of the small cluster regions, a segmentation of touching cell nuclei based on a contour shape of the small cluster region;
performing, on each of the large cluster regions, a segmentation of touching cell nuclei based on a texture in the large cluster region; and
outputting an image with cell boundaries based on results of the performed segmentations.

11. The computer program according to claim 10, comprising:

generating the binary mask with a thresholding, a k-mean clustering followed by a thresholding, or a machine learning method.

12. The computer program according to claim 10, comprising:

detecting for each closed contour in the binary mask, each of the concavity points present in the contour and based on a number of concavity points calculating a ratio of hull area to contour area;
classifying each of the closed contours as one of the following classifications: the single cell region, the small cluster region, or the large cluster region.
disqualifying clusters of cells which do not include concavity points inside the binary mask; and
generating a variance image for each of the closed contours classified as the small cluster regions, the variance image comprising:

generating an edge variance image;
finding a most likely pair of defects when a number of defects is greater than one, the most likely pair of defects comprising:

finding a Euclidean distance between each pair of defects;
if both defects are on the same side, identifying the pair of defects as an invalid pair; and
if the defects are on opposite sides, identifying the pair of defects having a smallest distance between the pair of defects as the most likely pair of defects, the most likely pair of defects corresponding to two or more cells.

13. The computer program according to claim 12, comprising:

introducing a second defect in the pair of defects for a single remaining defect or for remaining defects, which are on a same side of the contour and no valid pair is identified, the second defect being a point on a boundary on a line formed by a first defect point and a projection of the first defect's hull line; and
applying a shortest path algorithm to a path between the first defect point and the second defect point, the shortest path algorithm comprising:

extracting a region of interest;

vertically orientating the region of interest;

traversing the region of interest from a starting point and finding a next probable point in a path, selecting the next probably point in the path, which makes a smallest cost of the path, wherein the path is defined as $(p_1,p_2,...,p_i,.....,p_m)$, wherein $p_1$ is always a defect point, and the second defect is a last point in the path P, and $p_i$ is $i^{th}$ layer's point in path P.

14. The computer program according to claim 13, wherein the cost of the path is defined as cost function, and wherein the cost function is:

$$C(P) = \sum_{i=1}^{m} C_0\,(i, p_i) + \sum_{i=1}^{m-1} C_1\,(i, p_i, p_{i+1}\,)$$

where $C_0$ is the object term and $C_1$ is constraint term, $C_1$ will decide how much farther a next point ($p_{i+1}$) is from a current point ($p_i$), column wise.

$$C_1(i, p_i, p_{i+1}\,) = \begin{cases} 0 & if\ |p_i - p_{i+1}| \le 1 \\ \infty & otherwise \end{cases}$$

wherein $C_0$ is calculated from an intensity value of the variance image at $i^{th}$ layer and a previous point's cost value, and the point $p_{i+1}$ is selected based on a lowest cost and added to an existing path, P.

15. The computer program according to claim 10, wherein the segmentation based on the texture in the large cluster regions is a generalized Laplacian of Gaussian (gLoG) filtering based segmentation, the gLoG filtering based segmentation comprising:

inputting gray images extracted from the binary mask to generate cell segmentation boundaries of cell nuclei;

filtering the cell segmentation boundaries of the cell nuclei with a gLoG filter with one or more scales and orientations;

generating a response surface from the filtered cell segmentation boundaries of the cell nuclei using a distance map;

detecting a local maxima from the response surface to generate a plurality of seed points; and

for each of the plurality of seed points, applying a resolution algorithm.

16. The computer program according to claim 10, comprising:

generating a cell count, wherein:

for the single cell regions, a total number of cells based on total connected components from the binary mask;

for the small cluster regions, performing a morphological erosion and/or dilation on the image, which has segmentation boundaries overlaid on the binary mask to separate individual cells and a count of connected components; and

for the large cluster regions, a total number of large clusters labels from a local maximum clustering algorithm.

17. A system (200) for cell segmentation for biomedical imaging, the system (200) comprising:

an input module (210) configured to generate an input image (212) of a plurality of cells;

at least one module configured to process the input image of the plurality of cells to produce a cell count for the input image, the at least one module including a processor configured to:

generate a binary mask (216) from an input image of a plurality of cells, wherein the binary mask separates foreground cells from a background;

classify cell region components (410) of the binary mask each into single cell regions (224), small cluster regions (226), and large cluster regions (228), **characterized in that** the classification is based on a number of concavity points in a contour, a ratio of a contour area to hull area (430), and a layout of cells (440);

perform, on each of the small cluster regions, a segmentation of touching cell nuclei based on a contour shape of the small cluster region;

perform, on each of the large cluster regions, a segmentation of touching cell nuclei based on a texture in the large cluster region; and

output an image with cell boundaries based on results of the performed segmentations; and

a display for displaying the cell count for the output image, wherein the cell count comprises:

for the single cells regions, a total number of cells based on total connected components from the binary mask;

for the small cluster regions, performing a morphological erosion and/or dilation on the image, which has segmentation boundaries overlaid on the binary mask to separate individual cells and a count of connected components; and

for the large cluster regions, a total number of large clusters labels from a local maximum clustering algorithm.

**18.** The system (200) according to claim 17, wherein the processor is configured to:

generate the binary mask with a thresholding, a k-mean clustering followed by a thresholding, or a machine learning method;

detect for each closed contour in the binary mask, each of the concavity points present in the contour and based on a number of concavity points calculating a ratio of hull area to contour area;

classify each of the closed contours as one of the following classifications: the single cell region, the small cluster region, or the large cluster region.

disqualify clusters of cells which do not include concavity points inside the binary mask; and

generate a variance image for each of the closed contours classified as the small cluster regions, the variance image comprising:

generating an edge variance image;

finding a most likely pair of defects when a number of defects is greater than one, the most likely pair of defects comprising:

finding a Euclidean distance between each pair of defects;

if both defects are on the same side, identifying the pair of defects as an invalid pair; and

if the defects are on opposite sides, identifying the pair of defects having a smallest distance between the pair of defects as the most likely pair of defects, the most likely pair of defects corresponding to two or more cells.

**19.** The system (200) according to claim 18, wherein the processor is configured to:

introduce a second defect in the pair of defects for a single remaining defect or for remaining defects, which are on a same side of the contour and no valid pair is identified, the second defect being a point on a boundary on a line formed by a first defect point and a projection of the first defect's hull line; and

apply a shortest path algorithm to a path between the first defect point and the second defect point, the shortest path algorithm comprising:

extracting a region of interest;

vertically orientating the region of interest;

traversing the region of interest from a starting point and finding a next probable point in a path,

selecting the next probably point in the path, which makes a smallest cost of the path, wherein the path is defined as $(p_1, p_2, ..., p_i, ..., p_m)$, wherein $p_1$ is always a defect point, and the second defect is a last point in the path P, and $p_i$ is $i^{th}$ layer's point in path P;

wherein the cost of the path is defined as a cost function, and wherein the cost function is:

$$C(P) = \sum_{i=1}^{m} C_0\,(i, p_i) + \sum_{i=1}^{m-1} C_1\,(i, p_i, p_{i+1})$$

where $C_0$ is the object term and $C_1$ is constraint term, $C_1$ will decide how much farther a next point ($p_{i+1}$) is from a current point ($p_i$), column wise.

$$C_1(i, p_i, p_{i+1}) = \begin{cases} 0 & if\ |p_i - p_{i+1}| \leq 1 \\ \infty & otherwise \end{cases}$$

wherein $C_0$ is calculated from an intensity value of the variance image at $i^{th}$ layer and a previous point's cost value, and the point $p_{i+1}$ is selected based on a lowest cost and added to an existing path, P.

20. The system (200) according to claim 17, wherein the segmentation based on the texture in the large cluster regions is a generalized Laplacian of Gaussian (gLoG) filtering based segmentation, and the processor is configured to:

input gray images extracted from the binary mask to generate cell segmentation boundaries of cell nuclei;
filter the cell segmentation boundaries of the cell nuclei with a gLoG filter with one or more scales and orientations;
generate a response surface from the filtered cell segmentation boundaries of the cell nuclei using a distance map;
detect a local maxima from the response surface to generate a plurality of seed points; and
for each of the plurality of seed points, applying a resolution algorithm.

**Patentansprüche**

1. Computerimplementiertes automatisches Verfahren zur Zellsegmentierung für die biomedizinische Bildgebung, wobei das Verfahren Folgendes umfasst:

Erzeugen einer binären Maske (216) aus einem Eingabebild (212) einer Vielzahl von Zellen, wobei die binäre Maske Vordergrundzellen von einem Hintergrund trennt;
Klassifizieren von Zellbereichskomponenten (410) der binären Maske jeweils in einzelne Zellbereiche (224), kleine Clusterbereiche (226) und große Clusterbereiche (228),
**dadurch gekennzeichnet, dass** das Klassifizieren auf einer Anzahl von Konkavitätspunkten in einer Kontur, einem Verhältnis von einem Konturbereich zu einem Hüllbereich (430) und einem Layout von Zellen (440) basiert;
Durchführen, auf jedem der kleinen Clusterbereiche, einer Segmentierung sich berührender Zellkerne basierend auf einer Konturform des kleinen Clusterbereichs;
Durchführen, auf jedem der großen Clusterbereiche, einer Segmentierung sich berührender Zellkerne basierend auf einer Textur in den großen Clusterbereichen; und
Ausgeben eines Bildes mit Zellgrenzen basierend auf Ergebnissen der durchgeführten Segmentierungen.

2. Verfahren nach Anspruch 1, umfassend:

Erzeugen der binären Maske mit einem Schwellenwert, einem k-Means-Cluster gefolgt von einem Schwellenwert oder einem Maschinenlernverfahren.

3. Verfahren nach Anspruch 1, umfassend:

Erfassen, für jede geschlossene Kontur in der binären Maske, jedes der Konkavitätspunkte in der Kontur und, basierend auf einer Anzahl von Konkavitätspunkten, Berechnen eines Verhältnisses von Konturbereich zu Hüllbereich; und
Klassifizieren jeder der geschlossenen Konturen als eine der folgenden Klassifikationen: einzelner Zellbereich, kleiner Clusterbereich oder großer Clusterbereich.

4. Verfahren nach Anspruch 3, umfassend:

Aussondern von Zellclustern, die keine Konkavitätspunkte innerhalb der binären Maske beinhalten.

5. Verfahren nach Anspruch 3, umfassend:

Erzeugen eines Varianzbildes für jede der geschlossenen Konturen, die als die kleinen Clusterbereiche klassifiziert sind, wobei das Varianzbild Folgendes umfasst:

Erzeugen eines Kantenvarianzbildes;
Finden eines wahrscheinlichsten Paars von Defekten, wenn eine Anzahl von Defekten größer als eins ist, wobei das wahrscheinlichste Paar von Defekten Folgendes einschließt:

Finden eines euklidischen Abstandes zwischen jedem Paar von Defekten;
wenn beide Defekte auf der gleichen Seite sind, Identifizieren des Paares von Defekten als ein ungültiges Paar; und
wenn die Defekte auf gegenüberliegenden Seiten sind, Identifizieren des Paares von Defekten, die einen kleinsten Abstand zwischen dem Paar von Defekten als das wahrscheinlichste Paar von Defekten aufweisen, wobei das wahrscheinlichste Paar von Defekten zwei oder mehr Zellen entspricht.

6. Verfahren nach Anspruch 5, umfassend:

Einführen eines zweiten Defekts in das Paar von Defekten für einen einzigen restlichen Defekt oder für restliche Defekte, die auf der gleichen Seite der Kontur sind, und wenn kein gültiges Paar identifiziert wird, wobei der zweite Defekt ein Punkt auf einer Grenze auf einer durch einen ersten Defektpunkt und eine Projektion der Hülllinie des ersten Defekts gebildeten Linie ist; und
Anwenden eines Algorithmus für die kürzeste Strecke auf eine Strecke zwischen dem ersten Defektpunkt und dem zweiten Defektpunkt, wobei der Algorithmus für die kürzeste Strecke Folgendes umfasst:

Extrahieren eines Bereichs von Interesse;
vertikales Ausrichten des Bereichs von Interesse;
Durchqueren des Bereichs von Interesse von einem Startpunkt und Finden eines nächsten wahrscheinlichen Punktes auf einer Strecke,
Auswählen des nächsten wahrscheinlichen Punkts auf der Strecke, der den kleinsten Platzbedarf der Strecke ergibt, wobei die Strecke definiert ist als $(p_1, p_2, ..., p_i, ..., p_m)$, wobei $p_1$ immer ein Defektpunkt ist und der zweite Defekt ein letzter Punkt auf der Strecke P ist, und $p_i$ der $i$-te Punkt der Schicht auf der Strecke P ist.

7. Verfahren nach Anspruch 6, wobei der Platzbedarf der Strecke als eine Platzbedarfsfunktion definiert ist, und wobei die Platzbedarfsfunktion wie folgt ist:

$$C(P) = \sum_{i=1}^{m} C_0\,(i, p_i) + \sum_{i=1}^{m-1} C_1\,(i, p_i, p_{i+1})$$

wobei $C_0$ der Objektterm ist und $C_1$ der Restriktionsterm ist, wobei $C_1$ entscheiden wird, um wie viel weiter ein nächster Punkt $(p_{i+1})$ von einem aktuellen Punkt $(p_i)$ entfernt ist, spaltenweise,

$$C_1(i, p_i, p_{i+1}) = \begin{cases} 0 & \text{wenn } |p_i - p_{i+1}| \leq 1 \\ \infty & \text{anderenfalls} \end{cases}$$

wobei $C_0$ aus einem Intensitätswert des Varianzbildes bei der $i$-ten Schicht und dem Platzbedarfswert eines vorherigen Punkts berechnet wird, und der Punkt $p_{i+1}$ basierend auf einem geringsten Platzbedarf ausgewählt wird und zu einer vorhandenen Strecke P addiert wird.

8. Verfahren nach Anspruch 1, wobei die Segmentierung basierend auf der Textur in den großen Clusterbereichen eine Segmentierung auf der Grundlage eines verallgemeinerten Laplacian of Gaussian (gLoG)-Filters ist, wobei die Segmentierung auf gLoG-Filter-Basis Folgendes umfasst:

Eingeben von Graubildern, die aus der binären Maske extrahiert wurden, um Zellensegmentierungsgrenzen von Zellkernen zu erzeugen;

Filtern der Zellsegmentierungsgrenzen der Zellkerne mit einem gLoG-Filter mit einer oder mehreren Skalen und Ausrichtungen;

Erzeugen einer Antwortoberfläche aus den gefilterten Zellsegmentierungsgrenzen der Zellkerne unter Verwendung einer Abstandskarte;

Erkennen eines lokalen Maximums aus der Antwortoberfläche, um eine Vielzahl von Saatpunkten zu erzeugen; und

für jeden der Vielzahl von Saatpunkten Anwenden eines Auflösungsalgorithmus.

9. Verfahren nach Anspruch 1, umfassend:

Erzeugen einer Zellzählung, wobei:

für die einzelnen Zellbereiche eine Gesamtzahl von Zellen basierend auf der Gesamtzahl von verbundenen Komponenten von der binären Maske;

für die kleinen Clusterbereiche Durchführung einer morphologischen Erosion und/oder Dilatation auf dem Bild, wobei Segmentierungsgrenzen die binäre Maske überlagern, um einzelne Zellen und eine Anzahl von verbundenen Komponenten zu trennen; und

für die großen Clusterbereiche eine Gesamtanzahl von großen Clustermarkierungen von einem lokalen maximalen Clusteralgorithmus.

10. Computerprogramm, das computerlesbaren Code zur Zellsegmentierung für die biomedizinische Bildgebung speichert, wobei das Programm durch einen Computer ausführbar ist, um den Computer zu veranlassen, einen Prozess durchzuführen, der Folgendes umfasst:

Erzeugen einer binären Maske (216) aus einem Eingabebild (212) einer Vielzahl von Zellen, wobei die binäre Maske Vordergrundzellen von einem Hintergrund trennt;

Klassifizieren von Zellbereichskomponenten (410) der binären Maske jeweils in einzelne Zellbereiche (224), kleine Clusterbereiche (226) und große Clusterbereiche (228), **dadurch gekennzeichnet, dass** die Klassifizierung auf einer Anzahl von Konkavitätspunkten in einer Kontur, einem Verhältnis von einem Konturbereich zu einem Hüllbereich (430) und einem Layout von Zellen (440) basiert;

Durchführen, auf jedem der kleinen Clusterbereiche, einer Segmentierung sich berührender Zellkerne basierend auf einer Konturform des kleinen Clusterbereichs; und

Durchführen, auf jedem der großen Clusterbereiche, einer Segmentierung sich berührender Zellkerne basierend auf einer Textur in dem großen Clusterbereich; und

Ausgeben eines Bildes mit Zellgrenzen basierend auf Ergebnissen der durchgeführten Segmentierungen.

11. Computerprogramm nach Anspruch 10, umfassend:

Erzeugen der binären Maske mit einem Schwellenwert, einem k-Means-Cluster gefolgt von einem Schwellenwert oder einem Maschinenlernverfahren.

12. Computerprogramm nach Anspruch 10, umfassend:

Erfassen, für jede geschlossene Kontur in der binären Maske, jedes der Konkavitätspunkte in der Kontur und, basierend auf einer Anzahl von Konkavitätspunkten, Berechnen eines Verhältnisses von Hüllbereich zu Konturbereich;

Klassifizieren jeder der geschlossenen Konturen als eine der folgenden Klassifikationen: einzelner Zellbereich, kleiner Clusterbereich oder großer Clusterbereich;

Aussondern von Zellclustern, die keine Konkavitätspunkte innerhalb der binären Maske beinhalten; und

Erzeugen eines Varianzbildes für jede der geschlossenen Konturen, die als die kleinen Clusterbereiche klassifiziert sind, wobei das Varianzbild Folgendes umfasst:

Erzeugen eines Kantenvarianzbildes;

Finden eines wahrscheinlichsten Paares von Defekten, wenn eine Anzahl von Defekten größer als eins ist, wobei das wahrscheinlichste Paar von Defekten Folgendes umfasst:

Finden eines euklidischen Abstandes zwischen jedem Paar von Defekten;
wenn beide Defekte auf der gleichen Seite sind, Identifizieren des Paares von Defekten als ein ungültiges Paar; und
wenn die Defekte auf gegenüberliegenden Seiten sind, Identifizieren des Paares von Defekten, die einen kleinsten Abstand zwischen dem Paar von Defekten als das wahrscheinlichste Paar von Defekten aufweisen, wobei das wahrscheinlichste Paar von Defekten zwei oder mehr Zellen entspricht.

13. Computerprogramm nach Anspruch 12, umfassend:

Einführen eines zweiten Defekts in das Paar von Defekten für einen einzigen restlichen Defekt oder für restliche Defekte, die auf der gleichen Seite der Kontur sind, und wenn kein gültiges Paar identifiziert wird, wobei der zweite Defekt ein Punkt auf einer Grenze auf einer durch einen ersten Defektpunkt und eine Projektion der Hülllinie des ersten Defekts gebildeten Linie ist; und
Anwenden eines Algorithmus für die kürzeste Strecke auf eine Strecke zwischen dem ersten Defektpunkt und dem zweiten Defektpunkt, wobei der Algorithmus für die kürzeste Strecke Folgendes umfasst:

Extrahieren eines Bereichs von Interesse;
vertikales Ausrichten des Bereichs von Interesse;
Durchqueren des Bereichs von Interesse von einem Startpunkt und Finden eines nächsten wahrscheinlichen Punktes auf einer Strecke,
Auswählen des nächsten wahrscheinlichen Punkts auf der Strecke, der den kleinsten Platzbedarf der Strecke ergibt, wobei die Strecke definiert ist als $(p_1, p_2, ..., p_i, ..., p_m)$, wobei $p_1$ immer ein Defektpunkt ist und der zweite Defekt ein letzter Punkt auf der Strecke P ist, und $p_i$ der $i$-te Punkt der Schicht auf der Strecke P ist.

14. Computerprogramm nach Anspruch 13, wobei der Platzbedarf der Strecke als Platzbedarfsfunktion definiert ist, und wobei die Platzbedarfsfunktion wie folgt ist:

$$C(P) = \sum_{i=1}^{m} C_0\left(i, p_i\right) + \sum_{i=1}^{m-1} C_1\left(i, p_i, p_{i+1}\right)$$

wobei $C_0$ der Objektterm ist und $C_1$ der Restriktionsterm ist, wobei $C_1$ entscheiden wird, um wie viel weiter ein nächster Punkt ($p_{i+1}$) von einem aktuellen Punkt ($p_i$) entfernt ist, spaltenweise,

$$C_1\left(i, p_i, p_{i+1}\right) = \begin{cases} 0 & \text{wenn } |p_i - p_{i+1}| \le 1 \\ \infty & \text{anderenfalls} \end{cases}$$

wobei $C_0$ aus einem Intensitätswert des Varianzbildes bei der $i$-ten Schicht und dem Platzbedarfswert eines vorherigen Punkts berechnet wird, und der Punkt $p_{i+1}$ basierend auf einem geringsten Platzbedarf ausgewählt wird und zu einer vorhandenen Strecke P addiert wird.

15. Computerprogramm nach Anspruch 10, wobei die Segmentierung basierend auf der Textur in den großen Clusterbereichen eine Segmentierung auf der Grundlage eines verallgemeinerten Laplacian of Gaussian (gLoG)-Filters ist, wobei die Segmentierung auf gLoG-Filter-Basis Folgendes umfasst:

Eingeben von Graubildern, die aus der binären Maske extrahiert wurden, um Zellensegmentierungsgrenzen von Zellkernen zu erzeugen;
Filtern der Zellsegmentierungsgrenzen der Zellkerne mit einem gLoG-Filter mit einer oder mehreren Skalen und Ausrichtungen;
Erzeugen einer Antwortoberfläche aus den gefilterten Zellsegmentierungsgrenzen der Zellkerne unter Verwendung einer Abstandskarte;
Erkennen eines lokalen Maximums aus der Antwortoberfläche, um eine Vielzahl von Saatpunkten zu erzeugen; und
für jeden der Vielzahl von Saatpunkten Anwenden eines Auflösungsalgorithmus.

16. Computerprogramm nach Anspruch 10, umfassend:

Erzeugen einer Zellzählung, wobei:

für die einzelnen Zellbereiche eine Gesamtzahl von Zellen basierend auf der Gesamtzahl von verbundenen Komponenten von der binären Maske;

für die kleinen Clusterbereiche Durchführung einer morphologischen Erosion und/oder Dilatation auf dem Bild, wobei Segmentierungsgrenzen die binäre Maske überlagern, um einzelne Zellen und eine Anzahl von verbundenen Komponenten zu trennen; und

für die großen Clusterbereiche eine Gesamtanzahl von großen Clustermarkierungen von einem lokalen maximalen Clusteralgorithmus.

17. System (200) zur Zellsegmentierung für die biomedizinische Bildgebung, wobei das System (200) Folgendes umfasst:

ein Eingabemodul (210), das konfiguriert ist, um ein Eingabebild (212) einer Vielzahl von Zellen zu erzeugen; mindestens ein Modul, das konfiguriert ist, das Eingabebild der Vielzahl von Zellen zu verarbeiten, um eine Zellzählung für das Eingabebild zu erzeugen, wobei das mindestens eine Modul einen Prozessor einschließt, der konfiguriert ist zum:

Erzeugen einer binären Maske (216) aus einem Eingabebild einer Vielzahl von Zellen, wobei die binäre Maske Vordergrundzellen von einem Hintergrund trennt;

Klassifizieren von Zellbereichskomponenten (410) der binären Maske jeweils in einzelne Zellbereiche (224), kleine Clusterbereiche (226) und große Clusterbereiche (228), **dadurch gekennzeichnet, dass** die Klassifizierung auf einer Anzahl von Konkavitätspunkten in einer Kontur, einem Verhältnis von einem Konturbereich zu einem Hüllbereich (430) und einem Layout von Zellen (440) basiert;

Durchführen, auf jedem der kleinen Clusterbereiche, einer Segmentierung sich berührender Zellkerne basierend auf einer Konturform des kleinen Clusterbereichs;

Durchführen, auf jedem der großen Clusterbereiche, einer Segmentierung sich berührender Zellkerne basierend auf einer Textur in dem großen Clusterbereich; und

Ausgeben eines Bildes mit Zellgrenzen basierend auf Ergebnissen der durchgeführten Segmentierungen; und

eine Anzeige zum Anzeigen der Zellzählung für das Ausgabebild, wobei die Zellzählung Folgendes umfasst:

für die einzelnen Zellbereiche eine Gesamtzahl von Zellen basierend auf der Gesamtzahl von verbundenen Komponenten aus der binären Maske;

für die kleinen Clusterbereiche Durchführung einer morphologischen Erosion und/oder Dilatation auf dem Bild, wobei Segmentierungsgrenzen die binäre Maske überlagern, um einzelne Zellen und eine Anzahl von verbundenen Komponenten zu trennen; und

für die großen Clusterbereiche eine Gesamtanzahl von großen Clustermarkierungen von einem lokalen maximalen Clusteralgorithmus.

18. System (200) nach Anspruch 17, wobei der Prozessor konfiguriert ist zum:

Erzeugen der binären Maske mit einem Schwellenwert, einem k-Means-Cluster gefolgt von einem Schwellenwert oder einem Maschinenlernverfahren;

Erfassen, für jede geschlossene Kontur in der binären Maske, jedes der Konkavitätspunkte in der Kontur und, basierend auf einer Anzahl von Konkavitätspunkten, Berechnen eines Verhältnisses von Hüllbereich zu Konturbereich;

Klassifizieren jeder der geschlossenen Konturen als eine der folgenden Klassifikationen: einzelner Zellbereich, kleiner Clusterbereich oder großer Clusterbereich;

Aussondern von Zellclustern, die keine Konkavitätspunkte innerhalb der binären Maske beinhalten; und

Erzeugen eines Varianzbildes für jede der geschlossenen Konturen, die als die kleinen Clusterbereiche klassifiziert sind, wobei das Varianzbild Folgendes umfasst:

Erzeugen eines Kantenvarianzbildes;

Finden eines wahrscheinlichsten Paares von Defekten, wenn eine Anzahl von Defekten größer als eins ist, wobei das wahrscheinlichste Paar von Defekten Folgendes umfasst:

Finden eines euklidischen Abstandes zwischen jedem Paar von Defekten;

wenn beide Defekte auf der gleichen Seite sind, Identifizieren des Paares von Defekten als ein ungültiges Paar; und

wenn die Defekte auf gegenüberliegenden Seiten sind, Identifizieren des Paares von Defekten, die einen kleinsten Abstand zwischen dem Paar von Defekten als das wahrscheinlichste Paar von Defekten aufweisen, wobei das wahrscheinlichste Paar von Defekten zwei oder mehr Zellen entspricht.

19. System (200) nach Anspruch 18, wobei der Prozessor konfiguriert ist zum:

Einführen eines zweiten Defekts in das Paar von Defekten für einen einzigen restlichen Defekt oder für restliche Defekte, die auf der gleichen Seite der Kontur sind, und wenn kein gültiges Paar identifiziert wird, wobei der zweite Defekt ein Punkt auf einer Grenze auf einer durch einen ersten Defektpunkt und eine Projektion der Hülllinie des ersten Defekts gebildeten Linie ist; und

Anwenden eines Algorithmus für die kürzeste Strecke auf eine Strecke zwischen dem ersten Defektpunkt und dem zweiten Defektpunkt, wobei der Algorithmus für die kürzeste Strecke Folgendes umfasst:

Extrahieren eines Bereichs von Interesse;

vertikales Ausrichten des Bereichs von Interesse;

Durchqueren des Bereichs von Interesse von einem Startpunkt und Finden eines nächsten wahrscheinlichen Punktes auf einer Strecke,

Auswählen des nächsten wahrscheinlichen Punkts auf der Strecke, der den kleinsten Platzbedarf der Strecke ergibt, wobei die Strecke definiert ist als $(p_1, p_2, ..., p_i, ..., p_m)$, wobei $p_1$ immer ein Defektpunkt ist und der zweite Defekt ein letzter Punkt auf der Strecke P ist, und $p_i$ der $i$-te Punkt der Schicht auf der Strecke P ist; wobei der Platzbedarf der Strecke als eine Platzbedarfsfunktion definiert ist, und wobei die Platzbedarfsfunktion wie folgt ist:

$$C(P) = \sum_{i=1}^{m} C_0\left(i, p_i\right) + \sum_{i=1}^{m-1} C_1\left(i, p_i, p_{i+1}\right)$$

wobei $C_0$ der Objektterm ist und $C_1$ der Restriktionsterm ist, wobei $C_1$ entscheiden wird, um wie viel weiter ein nächster Punkt ($p_{i+1}$) von einem aktuellen Punkt ($p_i$) entfernt ist, spaltenweise,

$$C_1\left(i, p_i, p_{i+1}\right) = \begin{cases} 0 & \text{wenn } |p_i - p_{i+1}| \leq 1 \\ \infty & \text{anderenfalls} \end{cases}$$

wobei anderenfalls $C_0$ aus einem Intensitätswert des Varianzbildes bei der $i$-ten Schicht und dem Platzbedarfswert eines vorherigen Punkts berechnet wird, und der Punkt $p_{i+1}$ basierend auf einem geringsten Platzbedarf ausgewählt wird und zu einer vorhandenen Strecke P addiert wird.

20. System (200) nach Anspruch 17, wobei die Segmentierung basierend auf der Textur in den großen Clusterbereichen eine Segmentierung auf der Grundlage eines verallgemeinerten Laplacian of Gaussian (gLoG)-Filters ist, wobei der Prozessor konfiguriert ist zum:

Eingeben von Graubildern, die aus der binären Maske extrahiert wurden, um Zellensegmentierungsgrenzen von Zellkernen zu erzeugen;

Filtern der Zellsegmentierungsgrenzen der Zellkerne mit einem gLoG-Filter mit einer oder mehreren Skalen und Ausrichtungen;

Erzeugen einer Antwortoberfläche aus den gefilterten Zellsegmentierungsgrenzen der Zellkerne unter Verwendung einer Abstandskarte;

Erkennen eines lokalen Maximums aus der Antwortoberfläche, um eine Vielzahl von Saatpunkten zu erzeugen; und

für jeden der Vielzahl von Saatpunkten Anwenden eines Auflösungsalgorithmus.

# EP 3 151 192 B1

**Revendications**

1. Procédé automatisé mis en oeuvre par ordinateur pour une segmentation cellulaire pour imagerie biomédicale, le procédé comprenant :

   la génération d'un masque binaire (216) à partir d'une image d'entrée (212) d'une pluralité de cellules, dans lequel le masque binaire sépare les cellules d'avant-plan d'un arrière-plan ;
   la classification de composants de régions de cellules (410) du masque binaire chacune en régions de cellules individuelles (224), en régions de petites grappes (226) et en régions de grandes grappes (228), **caractérisé en ce que** la classification est basée sur un certain nombre de points de concavité dans un contour, un rapport d'une zone de contour sur une zone d'enveloppe (430) et une implantation de cellules (440) ;
   la réalisation, sur chacune des régions de petites grappes, d'une segmentation de noyaux de cellules touchantes sur la base d'une forme de contour de la région de petites grappes ;
   la réalisation, sur chacune des régions de grandes grappes, d'une segmentation de noyaux de cellules touchantes sur la base d'une texture dans les régions de grandes grappes ; et
   la sortie d'une image avec des limites cellulaires sur la base de résultats des segmentations réalisées.

2. Procédé selon la revendication 1, comprenant :

   la génération du masque binaire avec un seuillage, un groupage de k moyennes suivi d'un seuillage ou un procédé d'apprentissage en machine.

3. Procédé selon la revendication 1, comprenant :

   la détection pour chaque contour fermé du masque binaire de chacun des points de concavité présents dans le contour et sur la base d'un nombre de points de concavité en calculant un rapport de la zone de contour sur la zone d'enveloppe ; et
   la classification de chacun des contours fermés comme l'une des classifications suivantes : la région de cellules individuelles, la région de petites grappes ou la région de grandes grappes.

4. Procédé selon la revendication 3, comprenant :

   la disqualification de grappes de cellules qui n'incluent pas de points de concavité à l'intérieur du masque binaire.

5. Procédé selon la revendication 3, comprenant :

   la génération d'une image de variance pour chacun des contours fermés classifiés comme régions de petites grappes, l'image de variance comprenant :

      la génération d'une image de variance de bord ;
      la découverte d'une paire la plus vraisemblable de défauts lorsqu'un nombre de défauts est supérieur à un, la paire la plus vraisemblable de défauts inclut :

         la découverte d'une distance euclidienne entre chaque paire de défauts ;
         si les deux défauts se trouvent du même côté, l'identification de la paire de défauts comme paire invalide ; et
         si les défauts se trouvent sur des côtés opposés, l'identification de la paire de défauts ayant une distance la plus petite entre la paire de défauts comme paire la plus vraisemblable de défauts, la paire la plus vraisemblable de défauts correspondant à deux ou plus de cellules.

6. Procédé selon la revendication 5, comprenant :

   l'introduction d'un second défaut dans la paire de défauts pour un défaut restant individuel ou pour des défauts restants, qui se trouvent du même côté du contour sans qu'aucune paire valide ne soit identifiée, le second défaut étant un point sur une limite d'une ligne formée par un premier point de défaut et une projection de la ligne d'enveloppe du premier défaut ; et
   l'application d'un algorithme de trajet le plus court à un trajet entre le premier point de défaut et le second point de défaut, l'algorithme de trajet le plus court comprenant :

l'extraction d'une région d'intérêt ;

l'orientation de manière verticale de la région d'intérêt ;

le franchissement de la région d'intérêt depuis un point de départ et la découverte d'un point probable suivant dans un trajet,

la sélection du point probable suivant dans le trajet qui établit un coût le plus bas du trajet, dans lequel le trajet est défini par ($p_1$, $p_2$, ..., $p_i$ ..., $p_m$), dans lequel $p_1$ est toujours un point de défaut et le second défaut est un dernier point du trajet P et $p_i$ est le point de la $i^{ème}$ couche du trajet P.

7. Procédé selon la revendication 6, dans lequel le coût du trajet est défini comme une fonction de coût et dans lequel la fonction de coût est :

$$C(P) = \sum_{i=1}^{m} C_0\,(i, p_i) + \sum_{i=1}^{m-1} C_1\,(i, p_i, p_{i+1})$$

où $C_0$ est le terme objet et $C_1$ est le terme de contrainte, $C_1$ décidera de la distance à laquelle un point suivant ($p_{i+1}$) se trouve d'un point courant ($p_i$) dans le sens de la colonne,

$$C_1(i, p_i, p_{i+1}) = \begin{cases} 0 & \text{si } |p_i - p_{i+1}| \leq 1 \\ \infty & \text{autrement} \end{cases}$$

dans lequel $C_0$ est calculé à partir d'une valeur d'intensité de l'image de variance au niveau de la $i^{ème}$ couche et une valeur de coût du point précédent, et le point $p_{i+1}$ est choisi sur la base du coût le plus bas et ajouté à un trajet existant P.

8. Procédé selon la revendication 1, dans lequel la segmentation sur la base de la texture dans les régions de grandes grappes est une segmentation à base d'un laplacien généralisé de filtrage gaussien (gLoG), la segmentation basée sur le filtrage gLoG comprenant :

l'entrée d'images en demi-teintes extraites à partir du masque binaire pour générer des limites de segmentation cellulaire de noyaux de cellules ;

le filtrage des limites de segmentation cellulaire des noyaux de cellules avec un filtre gLoG avec une ou plusieurs échelles et orientations ;

la génération d'une surface de réponse à partir des limites de segmentation de cellules filtrées des noyaux de cellules en utilisant une carte de distance ;

la détection d'un maximum local à partir de la surface de réponse pour générer une pluralité de points de départ ; et

pour chacun de la pluralité de points de départ, l'application d'un algorithme de résolution.

9. Procédé selon la revendication 1, comprenant :

la génération d'un compte de cellules, dans lequel :

pour les régions de cellules individuelles, un nombre total de cellules sur la base des composants connectés totaux à partir du masque binaire ;

pour les régions de petites grappes, la réalisation d'une érosion et/ou d'une dilatation morphologique sur l'image, qui a des limites de segmentation qui recouvrent le masque binaire pour séparer des cellules individuelles et un compte de composants connectés ; et

pour les régions de grandes grappes, un nombre total d'étiquettes de grandes grappes à partir d'un algorithme de groupage maximum local.

10. Programme d'ordinateur stockant un code lisible par ordinateur pour une segmentation cellulaire pour une imagerie biomédicale, le programme étant exécutable par un ordinateur pour amener l'ordinateur à réaliser un processus comprenant :

la génération d'un masque binaire (216) à partir d'une image d'entrée (212) d'une pluralité de cellules, dans lequel le masque binaire sépare les cellules d'avant-plan d'un arrière-plan ;
la classification de composants de régions cellulaires (410) du masque binaire chacun en régions de cellules individuelles (224), en régions de petites grappes (226) et en régions de grandes grappes (228), **caractérisé en ce que** la classification est basée sur un nombre de points de concavité dans un contour, un rapport d'une zone de contour sur une zone d'enveloppe (430) et une implantation de cellules (440) ;
la réalisation, sur chacune des régions de petites grappes, d'une segmentation de noyaux de cellules touchantes sur la base d'une forme de contour de la région de petites grappes ;
la réalisation, sur chacune des régions de grandes grappes, d'une segmentation de noyaux de cellules touchantes sur la base d'une texture dans la région de grandes grappes ; et
la sortie d'une image avec des limites cellulaires sur la base de résultats des segmentations réalisées.

**11.** Programme informatique selon la revendication 10, comprenant :

la génération du masque binaire avec un seuillage, un groupage de k moyennes suivi d'un seuillage ou un procédé d'apprentissage en machine.

**12.** Programme informatique selon la revendication 10, comprenant :

la détection pour chaque contour fermé du masque binaire de chacun des points de concavité présents dans le contour et sur la base d'un nombre de points de concavité en calculant un rapport de la zone d'enveloppe sur la zone de contour ;
la classification de chacun des contours fermés comme une des classifications suivantes : la région de cellules individuelles, la région de petites grappes, ou la région de grandes grappes ;
la disqualification de grappes de cellules qui n'incluent pas de points de concavité à l'intérieur du masque binaire ; et
la génération d'une image de variance pour chacun des contours fermés classifiés comme régions de petites grappes, l'image de variance comprenant :

la génération d'une image de variance de bord ;
la découverte d'une paire la plus vraisemblable de défauts lorsqu'un nombre de défauts est supérieur à un, la paire la plus vraisemblable de défauts comprenant :

la découverte d'une distance euclidienne entre chaque paire de défauts ;
si les deux défauts se trouvent du même côté, l'identification de la paire de défauts comme paire invalide ; et
si les défauts se trouvent sur des côtés opposés, l'identification de la paire de défauts ayant une distance la plus faible entre la paire de défauts comme paire la plus vraisemblable de défauts, la paire la plus vraisemblable de défauts correspondant à deux ou plus de cellules.

**13.** Programme informatique selon la revendication 12, comprenant :

l'introduction d'un second défaut dans la paire de défauts pour un défaut individuel restant ou pour les défauts restants, qui sont d'un même côté du contour sans qu'aucune paire valide ne soit identifiée, le second défaut étant un point sur une limite d'une ligne formée par un premier point de défaut et une projection de la ligne d'enveloppe du premier défaut ; et
l'application d'un algorithme de trajet le plus court à un trajet entre le premier point de défaut et le second point de défaut, l'algorithme de trajet le plus court comprenant :

l'extraction d'une région d'intérêt ;
l'orientation de façon verticale de la région d'intérêt ;
le franchissement de la région d'intérêt à partir d'un point de départ et la découverte d'un point probable suivant dans un trajet,
la sélection du point probable suivant dans le trajet, qui établit un coût le plus bas du trajet, dans lequel le trajet est défini par $(p_1, p_2, ..., p_i, ..., p_m)$, dans lequel $p_1$ est toujours un point de défaut et le second défaut est un dernier point du trajet P et $p_1$ est le point de la $i^{ème}$ couche du trajet P.

**14.** Programme informatique selon la revendication 13, dans lequel le coût du trajet est défini comme fonction de coût et dans lequel la fonction de coût est la suivante :

$$C(P) = \sum_{i=1}^{m} C_0\left(i, p_i\right) + \sum_{i=1}^{m-1} C_1\left(i, p_i, p_{i+1}\right)$$

où $C_0$ est le terme objet et $C_1$ est le terme de contrainte, $C_1$ décidera de la distance à laquelle un point suivant ($p_{i+1}$) se trouve d'un point courant ($p_i$) dans le sens de la colonne,

$$C_1(i, p_i, p_{i+1}) = \begin{cases} 0 & \text{si } |p_i - p_{i+1}| \leq 1 \\ \infty & \text{autrement} \end{cases}$$

où $C_0$ est calculé à partir d'une valeur d'intensité de l'image de variance au niveau de la $i^{ème}$ couche et une valeur de coût du point précédent, et le point $p_{i+1}$ est choisi sur la base d'un coût le plus bas et ajouté à un trajet existant P.

**15.** Programme informatique selon la revendication 10, dans lequel la segmentation basée sur la texture dans les régions de grandes grappes est une segmentation basée sur un laplacien généralisé de filtrage gaussien (gLoG), la segmentation basée sur le filtrage gLoG comprenant :

l'entrée d'images en demi-teintes extraites à partir du masque binaire pour générer des limites de segmentation cellulaire de noyaux de cellules ;
le filtrage des limites de segmentation cellulaire des noyaux de cellules avec un filtre gLoG avec une ou plusieurs échelles et orientations ;
la génération d'une surface de réponse à partir des limites de segmentation de cellules filtrées des noyaux de cellules en utilisant une carte de distance ;
la détection d'un maximum local à partir de la surface de réponse pour générer une pluralité de points de départ ; et
pour chacun de la pluralité de points de départ, l'application d'un algorithme de résolution.

**16.** Programme informatique selon la revendication 10, comprenant :

la génération d'un compte de cellules, dans lequel :

pour les régions de cellules individuelles, un nombre total de cellules sur la base des composants connectés totaux à partir du masque binaire ;
pour les régions de petites grappes, la réalisation d'une érosion et/ou d'une dilatation morphologique sur l'image, qui a des limites de segmentation qui recouvrent le masque binaire pour séparer les cellules individuelles et un compte de composants connectés ; et
pour les régions de grandes grappes, un nombre total d'étiquettes de grandes grappes à partir d'un algorithme de groupage maximum local.

**17.** Système (200) pour la segmentation cellulaire pour une imagerie biomédicale, le système (200) comprenant :

un module d'entrée (210) configuré pour générer une image d'entrée (212) d'une pluralité de cellules ;
au moins un module configuré pour traiter l'image d'entrée de la pluralité de cellules afin de produire un compte de cellules pour l'image d'entrée, l'au moins un module incluant un processeur configuré pour :

générer un masque binaire (216) à partir d'une image d'entrée d'une pluralité de cellules, dans lequel le masque binaire sépare les cellules d'avant-plan d'un arrière-plan ;
classer des composants de régions cellulaires (410) du masque binaire chacun en régions de cellules individuelles (224), en régions de petites grappes (226) et en régions de grandes grappes (228), **caractérisé en ce que** la classification est basée sur un nombre de points de concavité dans un contour, un rapport d'une zone de contour sur une zone d'enveloppe (430) et une implantation de cellules (440) ;
réaliser sur chacune des régions de petites grappes une segmentation de noyaux de cellules touchantes sur la base d'une forme de contour de la région de petites grappes ;
réaliser sur chacune des régions de grandes grappes une segmentation de noyaux de cellules touchantes sur la base d'une texture dans la région de grandes grappes ; et
sortir une image avec des limites cellulaires sur la base de résultats des segmentations réalisées ; et

un afficheur pour afficher le compte de cellules pour l'image de sortie, dans lequel le compte de cellules comprend :

pour les régions de cellules individuelles, un nombre total de cellules sur la base de composants connectés totaux à partir du masque binaire ;
pour les régions de petites grappes, la réalisation d'une érosion et/ou d'une dilatation morphologique sur l'image, qui a des limites de segmentation qui recouvrent le masque binaire pour séparer des cellules individuelles et un compte de composants connectés ; et
pour les régions de grandes grappes, un nombre total d'étiquettes de grandes grappes à partir d'un algorithme de groupage maximum local.

**18.** Système (200) selon la revendication 17, dans lequel le processeur est configuré pour :

générer le masque binaire avec un seuillage, un groupage de k moyennes suivi d'un seuillage ou un procédé d'apprentissage en machine ;
détecter pour chaque contour fermé dans le masque binaire chacun des points de concavité présents dans le contour et sur la base d'un nombre de points de concavité en calculant un rapport de la zone d'enveloppe sur la zone de contour ;
classer chacun des contours fermés comme l'une des classifications suivantes : la région de cellules individuelles, la région de petites grappes ou la région de grandes grappes ;
disqualifier les grappes de cellules qui ne comprennent pas de points de concavité à l'intérieur du masque binaire ; et
générer une image de variance pour chacun des contours fermés classés comme régions de petites grappes, l'image de variance comprenant :

la génération d'une image de variance de bord ;
la découverte d'une paire la plus vraisemblable de défauts lorsqu'un nombre de défauts est supérieur à un, la paire la plus vraisemblable de défauts comprenant :

la découverte d'une distance euclidienne entre chaque paire de défauts ;
si les deux défauts se trouvent du même côté, l'identification de la paire de défauts comme paire invalide ; et
si les défauts se trouvent sur des côtés opposés, l'identification de la paire de défauts ayant une distance la plus faible entre la paire de défauts comme paire la plus vraisemblable de défauts, la paire la plus vraisemblable de défauts correspondant à deux ou plus de cellules.

**19.** Système (200) selon la revendication 18, dans lequel le processeur est configuré pour :

introduire un second défaut dans la paire de défauts pour un unique défaut restant ou pour les défauts restants, qui sont d'un même côté du contour sans qu'aucune paire valide ne soit identifiée, le second défaut étant un point sur une limite d'une ligne formée par un premier point de défaut et une projection de la ligne d'enveloppe du premier défaut ; et
appliquer un algorithme de trajet le plus court à un trajet entre le premier point de défaut et le second point de défaut, l'algorithme de trajet le plus court comprenant :

l'extraction d'une région d'intérêt ;
l'orientation de façon verticale de la région d'intérêt ;
le franchissement de la région d'intérêt à partir d'un point de départ et la découverte d'un point probable suivant dans un trajet,
la sélection du point probable suivant dans le trajet, qui établit un coût le plus bas du trajet, dans lequel le trajet est défini par $(p_1, p_2, ..., p_i, ..., p_m)$, dans lequel $p_1$ est toujours un point de défaut et le second défaut est un dernier point du trajet P et $p_i$ est le point de la $i^{ème}$ couche dans le trajet P ;
dans lequel le coût du trajet est défini comme fonction de coût et dans lequel la fonction de coût est la suivante :

$$C(P) = \sum_{i=1}^{m} C_0(i, p_i) + \sum_{i=1}^{m-1} C_1(i, p_i, p_{i+1})$$

où $C_0$ est le terme objet et $C_1$ est le terme de contrainte, $C_1$ décidera de la distance à laquelle un point suivant ($p_{i+1}$) se trouve d'un point courant ($p_i$) dans le sens de la colonne,

$$C_1(i, p_i, p_{i+1}) = \begin{cases} 0 & \text{si } |p_i - p_{i+1}| \le 1 \\ \infty & \text{autrement} \end{cases}$$

où $C_0$ est calculé à partir d'une valeur d'intensité d'une image de variance au niveau de la $i^{ème}$ couche et une valeur de coût du point précédent et le point $p_{i+1}$ est choisi sur la base du coût le plus bas et ajouté à un trajet existant P.

20. Système (200) selon la revendication 17, dans lequel la segmentation sur la base de la texture dans les régions de grandes grappes est une segmentation basée sur un laplacien généralisé de filtrage gaussien (gLoG) et le processeur est configuré pour :

   entrer des images en demi-teintes extraites à partir du masque binaire pour générer des limites de segmentation cellulaire de noyaux de cellules ;
   filtrer les limites de segmentation cellulaire des noyaux de cellules avec un filtre gLoG avec une ou plusieurs échelles et orientations ;
   générer une surface de réponse à partir des limites de segmentation de cellules filtrées des noyaux de cellules en utilisant une carte de distance ;
   détecter un maximum local à partir de la surface de réponse pour générer une pluralité de points de départ ; et
   pour chacun de la pluralité de points de départ, appliquer un algorithme de résolution.

FIG. 1

FIG. 2

Cell Image

FIG. 3A

Mask output from
Pre-Processing

FIG. 3B

EP 3 151 192 B1

EP 3 151 192 B1

400

420

410

**Concavity Points Detection**

216

**Connected Component - 1**

$$Ratio = \frac{Area\ (Connected\ Component)}{Area\ (Convex\ Hull)}$$

430

**Mask Image**

**Connected Component - 2**

**Cell Layout (Linearly arranged cells)**

440

**Single Cell OR Small Cluster OR Large Cluster**

o

o

420

**Concavity Points Detection**

**Connected Component - N**

$$Ratio = \frac{Area\ (Connected\ Component)}{Area\ (Convex\ Hull)}$$

430

**Cell Layout (Linearly arranged cells)**

440

**Single Cell OR Small Cluster OR Large Cluster**

FIG. 4

500

228
Large Cluster

510

520

224
Single Cells

530

226
Small Clusters

-------- Connected Component or Contour
———— Corresponding Conex Hull
——— Concavity Points

FIG. 5

FIG. 6

EP 3 151 192 B1

FIG. 7

Original Image

FIG. 8A

Variance Image

FIG. 8B

Invalid Pair: vectors pointing in
same direction

FIG. 9A

Valid Pair: vectors pointing in
same direction

FIG. 9B

Most Likely
Defects-Pair

D1     D3

Invalid Defects Pair

D2

Less Likely Defects-Pair

## FIG. 10

**11.1**
Introducing Single Defect
on Contour Boundary

1110

Hull

D1     D2

Projection
of D1 on
Hull

Introduced
second
defect D2,
forming pair

**11.2**
Introducing Single Defect on
Segmentation Boundary

1120

Introduced
second
defect D4,
forming
pair (D3,D4)

Shortest Path
(D1, D2)

D1     D4  D2

D3

Hull

Projection
of D3 on
Hull

**11.3**
Introducing multiple
defects on boundary

1130

D1

D3

Introduced
second
defect D3,
forming pair

D2

D4

Introduced
second
defect D4,
forming pair

## FIG. 11

FIG. 12

EP 3 151 192 B1

1310

Original Image

1320

Segmentation
Result

FIG. 13

1400

1450

| 1410 | Input Gray Image ($I_N$) (extracted using Mask) |
|---|---|

| 1420 | gLoG filtering with multiple scales and orientation |

| 1430 | Response Surface Generation |

| 1440 | Seed Detection by finding local maxima |

Seeds location

| 1450 | Local Maximum Clustering |

1460

| Segmented Cell Boundary Image |

FIG. 14

$R_N$

**Surface Plot representation**

FIG. 15A          FIG. 15B

Local maxima (peaks) from previous stage

Initial Cluster Labels

Peaks changed after clustering

Updated clusters Labels In Intermediate State

FIG. 16

FIG. 17

**EP 3 151 192 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5828776 A